# EUROPÄISCHE PATENTSCHRIFT

(11) **EP 0 418 671 B1**
(45) Veröffentlichungstag und Bekanntmachung des Hinweises auf die Patenterteilung: **13.04.1994**
(21) Anmeldenummer: 90117273.4
(22) Anmeldetag: 07.09.1990
(51) Int. Cl.: F16F 13/00

(54) **Hülsengummifeder mit hydraulischer Dämpfung für Lagerungen in Kraftfahrzeugen**
Rubber-sleeved spring with hydraulic damping for automotive vehicle mountings
Ressort à manchon élastomérique avec amortissement hydraulique, pour supports dans véhicules automobiles

(30) Priorität: 14.09.1989 DE 3930742
(43) Veröffentlichungstag der Anmeldung: 27.03.1991
(73) Patentinhaber: LEMFOERDER METALLWAREN AG., D-49441 Lemförde (DE)
(72) Erfinder: Jördens, Ernst-Günter, Dipl. Ing., D-2845 Damme (DE); Sprang, Ruediger, Dipl. Ing., D-6228 Eltville (DE); Vossel, Andreas, Dipl.-Ing., D-4500 Osnabrück (DE)
(74) Vertreter: Bruse, Willy Hans Heinrich

(56) Entgegenhaltungen:
- EP-A- 0 009 120
- DE-A- 3 810 309
- DE-A- 3 910 570
- US-A- 4 768 760
- PATENT ABSTRACTS OF JAPAN vol. 6, no. 56 (M-121)(934) 13 April 1982,& JP-A-56 167940 (TOUKAI GOMU KOGYO KK) 23 Dezember 1981,

## Beschreibung

Die Erfindung bezieht sich auf eine Hülsengummifeder mit hydraulischer Dämpfung zur Lagerung von Teilen in einem Kraftfahrzeug, welche die Gattungsmerkmale nach dem Oberbegriff des Patentanspruches 1 aufweist.

Bekannt ist eine solche Hülsengummifeder aus der EP-A-0 009 120. Die mit dem Dämpfungsmittel gefüllten Kammern sind bei dieser Anordnung durch Vertiefungen am Umfang des Gummikörpers gebildet, der auf die innere Lagerhülse aufvulkanisiert und von der äußeren Lagerhülse überdeckt ist. Die Abdichtung wird durch ein äußeres Schutzrohr erreicht, in welches die äußere Lagerhülse eingesetzt ist. Drosselkanäle verbinden mehrere Kammern permanent miteinander. Dadurch werden eingeleitete Schwingungen mit kleinen Amplituden in anwendungsspezifischen Frequenzbereichen gedämpft. Zur Vermeidung einer unerwünschten Verhärtung der Elastizität des Lagers ist es aus der US-PS 4,768,760 bereits bekannt, zwischen den mit einer Dämpfungsflüssigkeit gefüllten Kammern neben dem erwähnten Drosselkanal wenigstens einen Überströmkanal mit einer Absperrung anzuordnen, die sich erst bei einer vorbestimmten Druckdifferenz zwischen den Kammern öffnet, so daß diese Dämpfungsmittel erst bei größeren Wegamplituden wirksam werden und eine dynamische Verhärtung des Lagersystems vermeiden, das heißt, stochastisch auftretende Kräfte weicher abfangen. Dazu ist bei der Ausbildung nach der nicht vorveröffentlichten DE-OS 38 10 309 in dem Überströmkanal ein Ventil aus einem losen Ventilkörper und einer in dem Kanal ausgebildeten Ventilsitzfläche vorgesehen. Ein solches Ventil öffnet bei Überschreiten einer vorbestimmten Druckdifferenz zwischen den beiden Kammern, paßt sich aber nicht stochastischen Amplitudenänderungen an.

Die Ausbildung fester Drosselleisten in einem Drosselkanal ist an sich aus der US-PS 4,768,760 bekannt.

Aufgabe der Erfindung ist die Schaffung einer kostengünstigen Ausbildung einer Hülsengummifeder aus möglichst wenigen Teilen ohne mechanische Bearbeitung und komplizierte Montage für eine lange Lebensdauer bei hoher Betriebssicherheit.

Die Erfindung löst diese Aufgabe durch eine Ausbildung einer Hülsengummifeder der Gattung nach dem Oberbegriff des Patentanspruches 1 mit Merkmalen nach dem Kennzeichen des Patentanspruches 1.

Eine solche Hülsengummifeder besitzt keine losen Einzelteile und erfordert demgemäß keine Montagearbeiten. Eine hohe Betriebssicherheit wird dadurch erreicht, daß keine relativ zueinander beweglichen Teile vorhanden sind und die Freigabe des Uberströmkanals bei großen Wegamplituden der zu dämpfenden Schwingungen durch elastische Verformung des äußeren Schutzrohres erfolgt, wobei das Ausmaß dieser elastischen Verformungen sich zwangsläufig durch die Wegamplitude der auftretenden Schwingungen ergibt. Hierin liegt gegenüber den bekannten Ausbildungen ein beträchtlicher Vorteil. Der Flüssigkeitsaustausch zwischen den beiden Kammern über den Uberströmkanal erfolgt selbsttätig in Anpassung an die Wegamplitude der auftretenden Schwingungen. Erreicht wird dies durch radiale Verformungen des Schutzrohres, dessen Verformungscharakteristik durch entsprechende Querschnittsprofilierungen seiner Wandung beeinflußt werden kann. Bei einer Hülsengummifeder nach der Erfindung erfolgt lediglich eine Atmungsbewegung des Schutzrohres durch elastisches Aufweiten des Schutzrohres in radialer Richtung und Rückkehr in die Ausgangslage durch die materialelastischen Spannungen. Dadurch wird sichergestellt, daß die Funktionssicherheit der Hülsengummifeder über eine lange Lebensdauer erhalten bleibt.

Konstruktive Ausführungsbeispiele für die Erfindungsmerkmale ergeben sich aus der nachfolgenden Beschreibung.

Auf der Zeichnung zeigen:

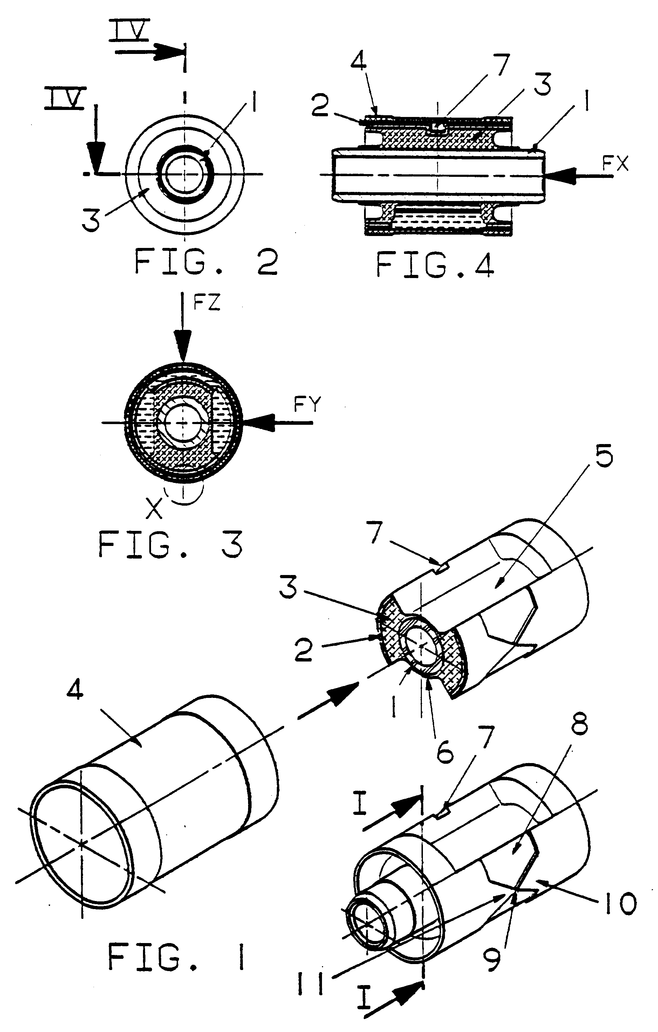

- Figur 1: eine Explosionsdarstellung einer Hülsengummifeder, mit einem Schnitt nach der Linie I - I,
- Figur 2: eine Stirnansicht,
- Figur 3: einen etwa mittigen Querschnitt,
- Figur 4: einen Längsschnitt nach der Linie IV - IV der Figur 2,
- Figur 5: in einem erheblich vergrößerten Maßstab die Einzelheit X in Figur 3,
- Figur 6: im Maßstab der Figur 5 eine abgewandelte Ausbildung der Einzelheit X in Figur 3,
- Figuren 7a - 7g: in einem von dem Maßstab der Figuren 1 - 4 abweichenden Maßstab unterschiedliche Geometrien für die Gestaltung der Absperrungen in dem Uberströmkanal und
- Figuren 8a - 8d: Schnitte entsprechend Fig. 7 durch unterschiedliche Geometrien für die Querschnittsgestaltung der äußeren Lagerhülse.

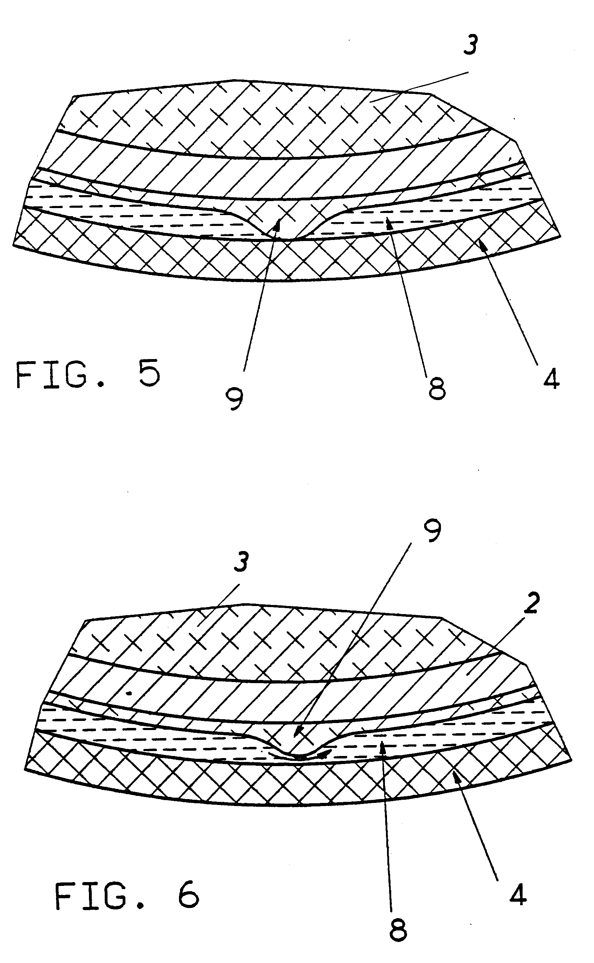

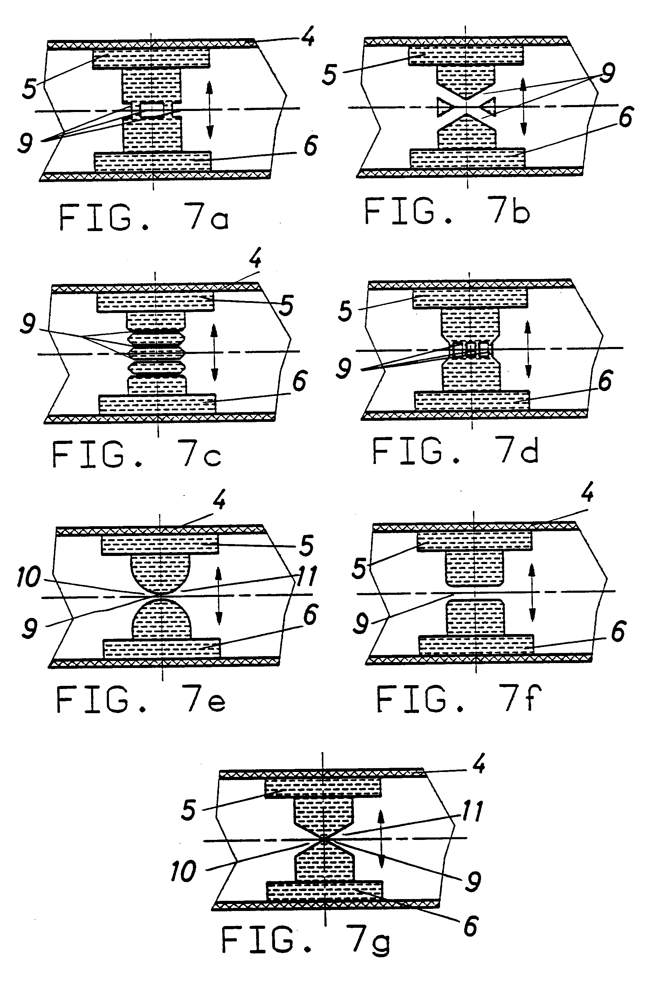

In seinen wesentlichen Teilen besteht die Hülsengummifeder aus der inneren Lagerhülse 1, der diese mit einem Abstand umschließenden äußeren Lagerhülse 2, dem zwischen beiden angeordneten, mit wenigstens einer Lagerhülse festhaftend verbundenen Gummikörper 3 und dem äußeren Schutzrohr 4, in welches die äußere Lagerhülse 2 unter Abdichtung eingesetzt ist. Bei dem Ausführungsbeispiel sind zwei sich diametral zur Mittelachse der Hülsengummifeder angeordnete Kammern 5 und 6 vorgesehen, die mit einer hydraulischen Dämpfungsflüssigkeit gefüllt und durch einen Drosselkanal 7 ständig miteinander verbunden sind. Auslegung und Bemessung dieses Drosselkanals 7 erfolgen in Anpassung an Reibungs- oder Drosselverluste sowie von Tilgungs- und Masseeffekten der verwendeten Dämpfungsflüssigkeit. Für die Lagerhülsen 1 und 2 werden vorteilhaft Metallhülsen verwendet. Das Schutzrohr 4 kann dagegen aus Metall oder Kunststoff bestehen. Neben einem oder auch mehreren Drosselkanälen 7 ist ein weiterer Uberströmkanal 8 vorgesehen, der eine Absperrung aufweist, die unter statischer Belastung der Hülsengummifeder geschlossen ist. Erst wenn sich unter dynamischer Belastung eine vorbestimmbare Druckdifferenz zwischen den beiden Kammern 5 und 6 ergibt, bewirkt diese Druckdifferenz das Offnen der Absperrung, so daß zusätzlich hydraulisches Dämpfungsmittel durch diesen Kanal 8 von der einen in die andere Kammer überströmen kann. Erreicht wird dies durch eine radial elastisch verformbare Ausbildung des an den Enden eingespannten Schutzrohres 4 im Bereich des Uberströmkanals 8 und durch geometrische Konturgestaltung der Drosselleiste 9 innerhalb des Uberströmkanals 8 (Figuren 5 und 6). Verschiedene Geometrien zur Gestaltung der Drosselleiste 9 und ihres Querschnitts bzw. zur Anordnung mehrerer Drosselleisten 9 sind in den Figuren 7a - 7g dargestellt. Die Figur 7a zeigt eine Ausführung, bei der eine Drosselleiste 9 einen oder mehrere ständig offene Durchgänge relativ kleinen Querschnitts aufweist. In der Figur 7b sind zwei Drosselleisten 9 in sich kreuzender Anordnung angeordnet. Die Figur 7c zeigt die Ausbildung mehrerer Drosselleisten 9 relativ kleinen Querschnitts in Strömungsrichtung hintereinander. Die Figur 7d entspricht im wesentlichen der Figur 7a und zeigt ständig offene Durchgänge im Uberströmkanal mit einem nahezu kapillaren Querschnitt. Die Figuren 7e und 7g zeigen eine Ausbildung der Drosselleiste 9 aus zwei gegeneinander gerichteten Zungen 10 und 11, die sich entweder entsprechend Figur 7e bogenförmig oder entsprechend Figur 7g linear im Querschnitt verjüngen und vorteilhaft eine feste Verbindung miteinander aufweisen, so daß eine durchgehende Drosselleiste 9 gebildet wird, die sich von der gemeinsamen Mitte nach außen im Querschnitt vergrößert. Durch ein solches Profil der Drosselleiste 9 wird eine Querschnittsverengung des Uberströmkanals 8 und somit eine Drucksteigerung an der Uberströmstelle erreicht, durch die die Dämpfungscharakteristik beeinflußt werden kann. Die Figur 7f zeigt schließlich eine über die Länge im Querschnitt gleichbleibende Drosselleiste 9, welche einfachen Anforderungen genügt.

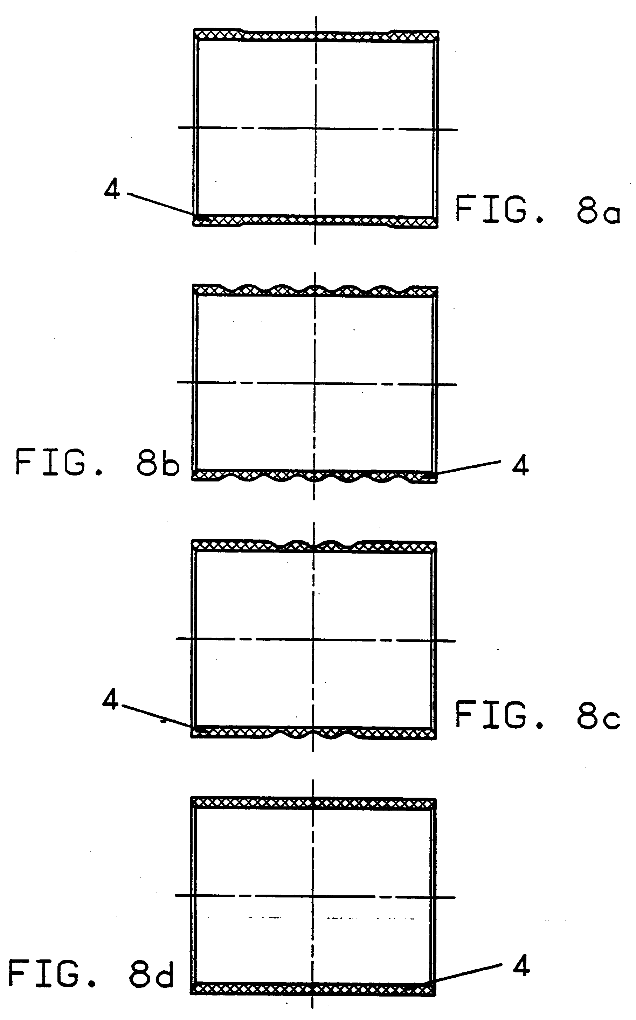

Bei den Ausführungsbeispielen ist die Drosselleiste 9 bzw. sind die Drosselleisten 9 in dem Uberströmkanal 8 einstückig mit dem Gummikörper 3 ausgebildet. Die Drosselleiste 9 liegt am Innenumfang des Schutzrohres 4 lose an, so daß sich das Schutzrohr 4 bei einem vorbestimmten Differenzdruck zwischen dem Innenraum der beiden Kammern unter elastischer Verformung aufweitet und das Uberströmen von Dämpfungsflüssigkeit aus der einen Kammer in die andere Kammer ermöglicht. Diese Atmungsbewegung des radial verformbaren Bereiches des Schutzrohres 4 kann durch unterschiedliche Geometrien des Quer- und Längsschnitts des äußeren Schutzrohres 4 an unterschiedliche Betriebsbedingungen angepaßt werden. Beispiele für verschiedene Profilierungen des äußeren Schutzrohres in dem elastisch verformbaren Bereich sind in den Figuren 8a - 8d dargestellt. Die Figur 8a zeigt eine zylindrische Wandung in dem radial elastisch verformbaren Bereich, der sich bei dem Beispiel in Figur 8b über eine größere axiale Länge erstreckt als bei dem Beispiel nach der Figur 8c. Die Figur 8d zeigt schließlich ein Schutzrohr 4 mit einem sich über die gesamte axiale Länge erstreckenden zylindrischen Querschnitt, beispielsweise aus Kunststoff oder auch Metall.

Durch solche Profilierungen kann bestimmt werden, mit welcher Charakteristik sich die Wölbung des Schutzrohres 4 in radialer Richtung bei stochastischen Belastungen vollzieht. Eine solche Anordnung kann auch in Verbindung mit einer elastischen Verformbarkeit der Drosselleiste 9 getroffen werden.

Es ergibt sich somit folgende Wirkungsweise:
Bei Belastung einer mit dem Merkmal nach der Erfindung ausgebildeten Hülsengummifeder durch Schwingungen mit relativ kleiner Amplitude in axialer und radialer Richtung Fx, Fy und Fz erfolgt eine Volumenänderung der beiden Kammern 5 und 6, so daß eine Druckdifferenz in beiden Kammern relativ zueinander entsteht und hydraulisches Dämpfungsmittel von der einen Kammer in die andere durch den Drosselkanal 7 überströmt. Dabei ist der Drosselkanal in Anpassung an diese kleinen Amplituden in herkömmlicher Weise ausgelegt. Bei eingeleiteten Schwingungen mit großen Amplituden und entsprechend erhöhtem Differenzdruck zwischen den beiden Kammern wird die Absperrung in dem Uberströmkanal 8 in Abhängigkeit von dem Differenzdruck wirksam. Nunmehr kann auch über diesen Uberströmkanal ein Flüssigkeitsaustausch zwischen den Kammern 5 und 6 erfolgen. Dadurch wird bei Schwingungen mit relativ großer Amplitude eine geringe dynamische Verhärtung des Lagersystems bewirkt.

## Patentansprüche

1. Hülsengummifeder mit hydraulischer Dämpfung für Lagerungen in Kraftfahrzeugen, bestehend aus
- einer inneren Lagerhülse (1),
- einer diese mit radialem Abstand umgebenden äußeren Lagerhülse (2),
- einem zwischen beiden an wenigstens einer festhaftend angeordneten Gummikörper (3),
--in den wenigstens zwei mit hydraulischem Dämpfungsmittel gefüllte Kammern (5,6) eingeformt sind,
--die durch einen ersten Drosselkanal (7) ständig miteinander verbunden sind und
- aus einem Schutzrohr (4), in welches die äußere Lagerhülse (2) abgedichtet eingesetzt ist,
dadurch gekennzeichnet, daß außerdem die Kammern (5,6) wenigstens einen Uberströmkanal (8) mit einer Absperrung, die sich erst bei einer vorbestimmten Druckdifferenz in den Kammern öffnet, aufweisen, daß das an den Enden eingespannte Schutzrohr (4) im Bereich des Überströmkanals (8) radial verformbar ausgebildet ist und daß radiale Verformungen des Schutzrohres (4) das Öffnen einer Absperrung (9) in dem Überströmkanal (8) bewirken.

2. Hülsengummifeder nach Anspruch 1, dadurch gekennzeichnet, daß die Absperrung in dem Überströmkanal (8) durch eine feste Drosselleiste (9) gebildet ist, die lose gegen eine radial verformbare Gegenfläche des Schutzrohres (4) wirksam ist.

3. Hülsengummifeder nach Anspruch 2, dadurch gekennzeichnet, daß die Drosselleiste (9) am Gummikörper (3) zwischen der inneren und der äußeren Lagerhülse angeformt ist und gegen den radial nach außen verformbaren Bereich des Schutzrohres (4) anliegt.

4. Hülsengummifeder nach Anspruch 3, dadurch gekennzeichnet, daß die Drosselleiste (9) des Überströmkanals (8) aus zwei federnden Zungen (10,11) gebildet ist, die von einander entgegengesetzten Seiten her in den Überströmkanal (8) hineinragen und sich zur gemeinsamen Mitte hin im Querschnitt verjüngen.

## Claims

1. Sleeve-type rubber shock absorber with hydraulic damping for bearing applications in motor vehicles, comprising
- an inner bearing sleeve (1),
- an outer bearing sleeve (2) surrounding this at a radial distance,
- a rubber body (3) arranged between the two and permanently attached to at least one,
-- in which at least two chambers (5, 6) filled with hydraulic damping fluid are moulded,
-- which are continuously connected to each other by means of a first choke channel (7) and
- a protective tube (4) into which the outer bearing sleeve (2) is inserted in a sealing manner,
characterized in that furthermore the chambers (5, 6) have at least one overflow channel (8) with a shut-off which only opens at a pre-set pressure difference in the chambers, that the protective tube (4) clamped at the ends is designed to be radially deformable in the area of the overflow channel (8) and that radial deformations of the protective tube (4) cause the opening of a shut-off (9) in the overflow channel (8).

2. Sleeve-type rubber shock absorber according to Claim 1, characterized in that the shut-off in the overflow channel (8) is formed by a fixed choke strip (9) which is loosely active against a radially deformable counter-surface of the protective tube (4).

3. Sleeve-type rubber shock absorber according to Claim 2, characterized in that the choke strip (9) is moulded onto the rubber body (3) between the inner and the outer bearing sleeve and rests against that area of the protective tube (4) that is radially deformable to the outside.

4. Sleeve-type rubber shock absorber according to Claim 3, characterized in that the choke strip (9) of the overflow channel (8) is formed of two resilient tongues (10, 11) which project into the overflow channel (8) from opposing sides and taper in their cross-section towards the common centre.

## Revendications

1. Manchon-ressort en caoutchouc à amortissement hydraulique servant de support dans des véhicules automobiles, composé
- d'une douille de support intérieure (1),
- d'une douille de support extérieure (2) entourant celle-ci à une certaine distance radiale,
- d'un corps en caoutchouc (3) disposé entre les deux douilles et adhérant sur au moins l'une d'elles,
-- dans lequel sont ménagées au moins deux chambres (5, 6) remplies de fluide hydraulique d'amortissement
-- reliées de façon permanente l'une à l'autre par l'intermédiaire d'un premier canal d'étranglement (7), et
- d'un tube de protection (4), dans lequel est inse rée de façon étanche la douille de support extérieure (2),
caractérisé en ce que
les chambres (5, 6) comportent, en outre, au moins un canal de décharge (8) pourvu d'un barrage qui ne s'ouvre qu'à partir d'une différence de pression prédéterminée entre les deux chambres, en ce que le tube de protection (4) bridé au niveau de ses extrémités est conçu de façon radialement déformable au niveau du canal de décharge (8), et en ce que la déformation radiale du tube de protection (4) provoque l'ouverture du barrage (9) agencé dans le canal de décharge (8).

2. Manchon ressort selon la revendication 1, caractérisé en ce que le barrage menage dans le canal de décharge (8) est constitué par une barrette d'étranglement fixe (9) qui agit librement sur une face conjuguée radialement déformable du tube de protection (4).

3. Manchon-ressort selon la revendication 2, caractérisé en ce que la barrette d'étranglement (9) est formée sur et fait corps avec le corps élastomère (3), entre les douilles de support intérieure et extérieure et s'appuie sur la zone du tube de protection (4), qui peut être déformée radialement vers l'extérieur.

4. Manchon-ressort selon la revendication 3, caractérisé en ce que la barrette d'étranglement (9) du canal de décharge (8) est constituée de deux lèvres élastiques (10, 11) saillant à l'intérieur du canal de décharge (8), depuis des côtes opposés l'un à l'autre, la section des lèvres s'effilant vers le centre commun de celles-ci.
